Europäisches Patentamt

European Patent Office

Office européen des brevets

(19)

(11) Veröffentlichungsnummer: **0 078 343**
**B1**

(12) **EUROPÄISCHE PATENTSCHRIFT**

(45) Veröffentlichungstag der Patentschrift:
14.08.85

(21) Anmeldenummer: 81109462.2

(22) Anmeldetag: 31.10.81

(51) Int. Cl.⁴: **B 65 G 53/40**, B 65 G 53/66

(54) Verfahren und Vorrichtung zur dosierten Abgabe von Schüttgut.

(43) Veröffentlichungstag der Anmeldung:
11.05.83 Patentblatt 83/19

(45) Bekanntmachung des Hinweises auf die Patenterteilung:
14.08.85 Patentblatt 85/33

(84) Benannte Vertragsstaaten:
**BE CH DE FR GB LI SE**

(56) Entgegenhaltungen:
**DE - A - 2 145 015**
**DE - A - 2 849 826**
**DE - C - 2 533 070**

(73) Patentinhaber: **KBI Klöckner-Becorit Industrietechnik GmbH, In der Beckuhl 12, D-4224 Hünxe (DE)**

(72) Erfinder: **Butz, Gerhard, Hellmannsweg 43, D-4236 Hamminkeln 4 (DE)**
Erfinder: **Stegner, Mathias, Kaiserslautener Strasse 30, D-6806 Viernheim (DE)**

(74) Vertreter: **Katscher, Helmut, Dipl.-Ing., Bismarckstrasse 29, D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zur dosierten Abgabe von Schüttgut aus einem Behälter an eine pneumatische Förderleitung mittels eines vor dem Behälterauslass angeordneten, kontinuierliche Hubbewegungen ausführenden Dosierkörpers.

Die Dosierung von Schüttgut, das aus einem Behälter an eine pneumatische Förderleitung abgegeben wird, durch einfache Veränderung des Auslassquerschnitts des Behälters, ist unzureichend, weil insbesondere bei schwierigem Schüttgut, das nicht gleichmässig fliesst und/oder zur Brückenbildung neigt, keine geregelte dosierte Abgabe des Schüttguts gewährleistet ist.

Kontinuierlich bewegte Zellenradschleusen als Dosiervorrichtungen haben zwar den Vorteil, dass der Behälter drucklos sein kann, d. h. dass ein offener Behälter anstelle eines geschlossenen Druckbehälters verwendet werden kann. Diese Zellenradschleusen haben jedoch aufgrund der Druckdifferenz zwischen Ein- und Auslauf den Nachteil, dass abhängig von der Dichtheit ggf. hohe Leckluftströme auftreten, die den freien Fluss des Schüttguts in das Zellenrad behindern. Weiterhin sind sie einem verhältnismässig hohen Verschleiss unterworfen, weil insbesondere bei grobkörnigem Schüttgut zwischen den gegeneinander bewegten Teilen der Zellenradschleuse Schüttgutteile abgeschert oder eingeklemmt werden können.

Es ist auch bekannt, Zellenradschleusen als Dosierorgane unter Druckbehältern einzusetzen. Dann treten zwar keine Leckluftströme auf; die Gefahr einer Brückenbildung besteht aber weiterhin; ausserdem ist diese Lösung konstruktiv und steuerungstechnisch sehr aufwendig.

Bei einem bekannten Verfahren der eingangs genannten Art (DE-PS 25 33 070) führt der Dosierkörper, der im Bereich des Behälterauslasses angeordnet ist, kontinuierliche Hubbewegungen aus, wobei die Grösse des Hubs und/oder die Hubfrequenz in Abhängigkeit vom Druck in der Förderleitung gesteuert wird. Dadurch werden bei verhältnismässig einfachem Aufbau der verwendeten Vorrichtung übermässiger Verschleiss und die Gefahr einer Brückenbildung wirksam verhindert und eine geregelte Dosierung sichergestellt. Die zur Durchführung des Verfahrens erforderliche Vorrichtung, insbesondere die Steuereinrichtung, ist jedoch verhältnismässig aufwendig, weil eine Hubänderung und/oder eine Frequenzänderung durchgeführt werden muss. Um die Möglichkeit einer Hubänderung zu schaffen, muss der Hubantrieb für den grösstmöglichen Hubweg ausgelegt werden, obwohl für die meisten Anwendungsfälle ein wesentlich geringerer Hubweg ausreicht. Die Steuerungsmassnahmen für eine Frequenzverstellung sind ebenfalls mit grösserem Aufwand verbunden.

Aufgabe der Erfindung ist es daher, ein Verfahren der eingangs genannten Art so auszugestalten, dass die gewünschte Veränderung der Dosiermenge in sehr einfacher Weise und mit geringem Bauaufwand, insbesondere hinsichtlich der Steuerungseinrichtung, erfolgen kann.

Diese Aufgabe wird erfindungsgemäss dadurch gelöst, dass der Dosierkörper Hubbewegungen mit konstantem Hubweg ausführt und dass die Mittellage der Hubbewegungen veränderbar ist. Dadurch entfällt insbesondere die aufwendige Steuerung für eine Frequenzänderung. Selbst bei konstantgehaltener Frequenz würde eine Änderung der Hubhöhe Schwierigkeiten hinsichtlich des Hubantriebs und der Steuerung bereiten, weil der Hubantrieb in gleichbleibenden Zeitabschnitten dann unterschiedliche Hubwege zurücklegen müsste. Diese Schwierigkeiten werden mit dem erfindungsgemässen Verfahren überwunden, weil der Hubweg auch bei Änderungen der Dosiermenge konstant bleibt. Vorzugsweise wird dabei auch die Hubfrequenz der Hubbewegungen konstant gehalten.

Die Erfindung betrifft weiter eine vorteilhafte Vorrichtung zur Durchführung des Verfahrens, wie sie in den Unteransprüchen gekennzeichnet ist.

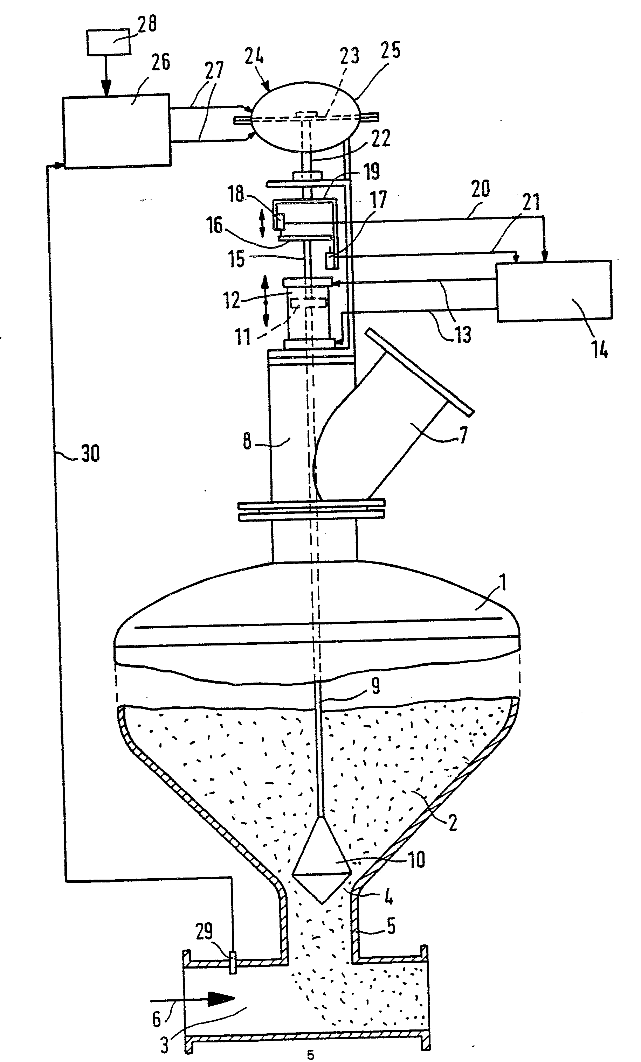

Die Erfindung wird nachfolgend an einem Ausführungsbeispiel näher erläutert, das in der Zeichnung dargestellt ist. Die einzige Figur der Zeichnung zeigt teilweise in einer Ansicht und teilweise im Schnitt einen Behälter 1, aus dem Schüttgut 2 dosiert an eine pneumatische Förderleitung 3 abgegeben wird. Der Behälter 1 ist als geschlossener Druckbehälter ausgeführt, der in seinem unteren Teil konisch zu einem Behälterauslass 4 verläuft, der über einen kurzen Rohrstutzen 5 seitlich an die Förderleitung 3 angeschlossen ist.

Aus der mit einem Pfeil 6 bezeichneten Richtung, d. h. von links in der Zeichnung, wird ein gasförmiges Fördermedium unter Druck zugeführt, beispielsweise Druckluft, das das zugeführte Schüttgut in der Förderleitung 3 nach rechts fördert.

An der Oberseite des Behälters 1 mündet eine Beschickungsleitung 7 für das Schüttgut im Bereich einer senkrechten Hubstangen-Durchführung 8, durch die eine vorzugsweise senkrechte Hubstange 9 eintritt. Die Hubstange 9 trägt an ihrem unteren Ende einen beim dargestellten Ausführungsbeispiel doppelkegelförmigen Dosierkörper 10, der im Bereich des Behälterauslasses 4 angeordnet ist.

Oberhalb der Durchführung 8 ist die Hubstange 9 mit einem Kolben 11 eines als Kolben-Zylinder-Einheit ausgeführten Hubantriebs 12 verbunden, der über Leitungen 13 von einer Antriebs- und Steuereinheit 14 mit Druckmittel versorgt wird, beispielsweise Druckluft oder Hydraulikflüssigkeit, um den Kolben 11 und damit auch die Hubstange 9 und den Dosierkörper 10 zu kontinuierlichen Hubbewegungen mit konstanter Hubfrequenz und konstantem Hubweg anzutreiben. Durch diese Hubbewegungen des Dosierkörpers 10 wird das Schüttgut 2 dosiert aus dem Behälter 1 an die Förderleitung 3 abgegeben.

In Verlängerung der Hubstange 9 über den Kolben 11 hinaus ragt eine Stange 15 aus dem Hubantrieb 12, die an ihrem oberen Ende als Steuerkörper 16 eine Platte trägt. Zwei Endschalter 17, 18 sind in unterschiedlicher Höhe an einem gabelförmigen Träger 19 angeordnet. Jeweils in der oberen und unteren Hubendstellung betätigt der Steuerkörper 16 die Endschalter 18 bzw. 17, die über Leitungen 20, 21 mit der Steuereinheit 14 verbunden sind und bei Betätigung jeweils eine Richtungsumsteuerung für den Hubantrieb 12 bewirken.

Der gabelförmige Träger 19 ist über eine vorzugsweise senkrechte Stange 22 mit einer Membran 23 eines Stellantriebs 24 verbunden, der einen Behälter 25 aufweist, dessen durch die Membran 23 voneinander getrennte obere und untere Kammer mit einem Druckmittel beaufschlagt werden können.

Hierzu ist eine Steuereinrichtung 26 vorgesehen, die über Leitungen 27 die beiden Kammern des Stellantriebs 24 so beaufschlagen, dass der gabelförmige Träger 19 in die jeweils gewünschte Höhenlage gebracht wird. Dadurch verschiebt sich die Mittellage der Hubbewegungen des Dosierkörpers 10.

Die Betätigung der Steuereinrichtung 26 erfolgt entweder durch Eingriff von aussen über einen Schalter 28 oder bei automatischem Betrieb durch einen in der Förderleitung 3 angeordneten Druckfühler 29, der über eine Leitung 30 mit der Steuereinrichtung 26 verbunden ist. Hierdurch kann die Veränderung der Mittellage der Hubbewegungen des Dosierkörpers 10 in Abhängigkeit vom Druck in der Förderleitung 3 gesteuert werden.

Werden die beiden Endschalter 17, 18 gemeinsam durch den Stellantrieb 25 nach unten verstellt, so verlagert sich die Mittellage der Hubbewegungen des Dosierkörpers 10 in Richtung auf den Behälterauslass 4; die Dosiermenge wird dadurch verringert. Entsprechend vergrössert sich die Dosiermenge bei einer Verstellung des die Endschalter 17, 18 tragenden Trägers 19 nach oben.

## Patentansprüche

1. Verfahren zur dosierten Abgabe von Schüttgut aus einem Behälter (1) an eine pneumatische Förderleitung (3) mittels eines vor dem Behälterauslass (4) angeordneten, kontinuierliche Hubbewegungen ausführenden Dosierkörpers (10), dadurch gekennzeichnet, dass der Dosierkörper (10) Hubbewegungen mit konstantem Hubweg ausführt und dass die Mittellage der Hubbewegungen veränderbar ist.

2. Verfahren nach Anspruch 1, dadurch gekennzeichnet, dass die Veränderung der Mittellage der Hubbewegungen in Abhängigkeit vom Druck in der Förderleitung (3) gesteuert wird.

3. Verfahren nach Anspruch 1, dadurch gekennzeichnet, dass die Hubfrequenz der Hubbewegungen konstant ist.

4. Vorrichtung zur Durchführung des Verfahrens nach Anspruch 1 mit einem Behälter (1), vor dessen Behälterauslass (4) ein Dosierkörper (10) angeordnet ist, der über eine bewegliche Hubstange (9) mit einem Hubantrieb (12) verbunden ist, dadurch gekennzeichnet, dass ein mit dem Dosierkörper (10), der Hubstange (9) oder dem Hubantrieb (11, 12) verbundener Steuerkörper (16) in den beiden Hubendlagen jeweils einen mit dem Hubantrieb (12, 14) verbundenen Endschalter (17, 18) betätigt, und dass die beiden Endschalter (17, 18) gemeinsam in Hubrichtung verstellbar sind.

5. Vorrichtung nach Anspruch 4, dadurch gekennzeichnet, dass die beiden Endschalter (17, 18) an einem in Hubrichtung mittels eines Stellantriebs (24) verstellbaren Träger (19) angebracht sind.

6. Vorrichtung nach Anspruch 5, dadurch gekennzeichnet, dass der Stellantrieb (24) für den Träger (19) der Endschalter (17, 18) mit einer Steuereinrichtung (26) verbunden ist, die mit einem Druckfühler (29) in der Förderleitung (3) in Verbindung steht.

## Claims

1. A method for the metered delivery of bulk material from a container (1) to a pneumatic conveying line (3) by means of a metering element (10) which is arranged upstream of the container outlet (4) and carries out continuous lifting movements, characterized in that the metering element (10) carries out lifting movements of a constant height of lift, and in that the central position of the lifting movements is variable.

2. A method as claimed in Claim 1, characterized in that the variation of the central position of the lifting movements is controlled as a function of the pressure prevailing in the conveying line (3).

3. A method as claimed in Claim 1, characterized in that the frequency of the lifting movements is constant.

4. A device for the performance of the method as claimed in Claim 1, comprising a container (1), upstream of the outlet (4) of which there is arranged a metering element (10) which is connected to a lift drive (12) via a movable lifting rod (9), characterized in that a control element (16), which is connected to the metering element (10), the lifting rod (9) or the lift drive (11, 12), actuates in the two lift end positions a respective limit switch (17, 18) which is connected to the lift drive (12, 14), and in that the two limit switches (17, 18) are jointly adjustable in the lifting direction.

5. A device as claimed in Claim 4, characterized in that the two limit switches (17, 18) are fitted to a support (19) which is adjustable in the lifting direction by means of an actuator (24).

6. A device as claimed in Claim 5, characterized in that the actuator (24) for the support (19) of the limit switches (17, 18) is connected to a control unit (26) which is in communication with a pressure sensor (29) in the conveying line (3).

## Revendications

1. Procédé pour le dégagement dosé de matière en vrac d'un récipient (1) vers un conduit de transport pneumatique (3), au moyen d'un corps de dosage (10) disposé en amont de l'orifice de sortie (4) du récipient et effectuant des mouvements de levée continus, caractérisé en ce que le corps de dosage (10) effectue des mouvements de va-et-vient à course constante et en ce que le point milieu des mouvements de va-et-vient est déplaçable.

2. Procédé selon la revendication 1, caractérisé en ce que le déplacement du point milieu des mouvements de va-et-vient est commandé en fonction de la pression qui règne dans le conduit de transport (3).

3. Procédé selon la revendication 1, caractérisé en ce que la fréquence du mouvement de va-et-vient est constante.

4. Dispositif pour la mise en œuvre du procédé selon la revendication 1, comportant un récipient (1) dont l'orifice de sortie (4) comporte, en amont, un corps de dosage (10) qui est relié à un entraînement à mouvement de va-et-vient (12) via une tringle mobile (9), caractérisé en ce qu'un élément de commande (16) relié au corps de dosage (10), à la tringle (9) ou à l'entraînement à mouvement de va-et-vient (11, 12) actionne chaque fois, dans les deux positions extrêmes, un contacteur de fin de course (17, 18) relié à l'entraînement à mouvement de va-et-vient (12, 14) et en ce que les deux contacteurs de fin de course (17, 18) sont réglables simultanément dans la direction du mouvement de va-et-vient.

5. Dispositif selon la revendication 4, caractérisé en ce que les deux contacteurs de fin de course (17, 18) sont agencés sur un support (19) qui est réglable dans la direction du mouvement de va-et-vient, au moyen d'un dispositif de réglage (24).

6. Dispositif selon la revendication 5, caractérisé en ce que le dispositif de réglage (24) du support (19) des contacteurs de fin de course (17, 18) est connecté à un dispositif de commande (26) qui est relié à une sonde de pression (29) logée dans le conduit de transport (3).

0 078 343